**Europäisches Patentamt**

**European Patent Office**

**Office européen des brevets**

(11) Veröffentlichungsnummer: **0 374 718**
**A1**

## (12) EUROPÄISCHE PATENTANMELDUNG

(21) Anmeldenummer: **89123048.4**

(22) Anmeldetag: **13.12.89**

(51) Int. Cl.⁵: **F16L 37/00**

(30) Priorität: **16.12.88 DE 3842500**

(43) Veröffentlichungstag der Anmeldung:
**27.06.90 Patentblatt 90/26**

(84) Benannte Vertragsstaaten:
**DE ES FR GB IT NL SE**

(71) Anmelder: **APPLIED POWER INC.**
**P.O.Box 325**
**Milwaukee Wisconsin 53201(US)**

(72) Erfinder: **Broere, Jaap J.**
**Vinkenbaan 8**
**NL-3815 RD Amersfoort(NL)**

(74) Vertreter: **Franke, Karl Wilhelm, Dr.**
**Steinsdorfstrasse 10**
**D-8000 München 22(DE)**

(54) **Kupplungseinheit.**

(57) Gegenstand der Erfindung ist eine Kupplungseinheit zum lösbaren Verbinden von Fluidleitungen in oder an zwei in ihrer Lage relativ zueinander veränderbaren Bauteilen.

Zur Sicherstellung einer zuverlässigen Zentrierung der Enden der miteinander zu verbindenden Fluidleitungen aufeinander bei gleichzeitiger Vermeidung unzulässig hoher Querkraftbelastungen ist gemäß der Erfindung zwischen den die miteinander zu verbindenden Fluidleitungen (L bzw. K) enthaltenden Bauteilen (M und W) eine Zwischenplatte (1) vorgesehen, die an dem einen Bauteil (M) mittels wenigstens einer daran befestigten Führungsstange (F) axial verschiebbar gehalten und mittels wenigstens einer darin vorgesehenen Kolbenstange (S) in Richtung auf den anderen Bauteil (W) zu bzw. davon weg verstellbar ist und in axialen Aufnahmen (2) eine der Anzahl der herzustellenden Leitungsverbindungen entsprechende Anzahl von Muffen (3) enthält, die jede in ihrer jeweiligen Aufnahme (2) mit axialem und radialem Spiel gehalten sind und an dem einen Bauteil (M) jeweils mit einer beweglichen Schlauchleitung (L) verbunden und an dem anderen Bauteil (W) je einem fest angeordneten Anschlußstutzen (A) zugeordnet sind.

Fig.1

## Kupplungseinheit

Die Erfindung betrifft eine Kupplungseinheit zum lösbaren Verbinden von Fluidleitungen in zwei in ihrer Lage relativ zueinander veränderbaren Bauteilen, wie sie im Oberbegriff des Patentanspruchs 1 im einzelnen angegeben ist.

Bei während ihres Betriebs an verschiedenen Stellen mit Druckfluid zu speisenden Maschinen gibt es eine Vielzahl von Fluidleitungen für die Zu- und Abführung von Druckfluid zu bzw. von dem jeweiligen Einsatzort. Wenn nun einzelne Bauteile der Maschine, in denen solche Fluidleitungen verlaufen, beispielsweise für eine Umrüstung der Maschine auf eine andere Betriebsart ausgetauscht werden müssen, besteht der Wunsch, die verschiedenen Fluidleitungen rasch und sicher voneinander lösen und, gegebenenfalls in anderer Weise, wieder zusammenfügen zu können, wobei eine möglichst weitgehend automatische Arbeitsweise angestrebt wird.

Dabei besteht ein wesentliches Problem darin, daß beim Zusammenfügen der Fluidleitungen zum einen eine zuverlässige Zentrierung der Muffe am Ende der einen Leitung auf den Anschlußstutzen am Ende der anderen Leitung gewährleistet werden muß und zum anderen die Größe der auf die zusammenzufügenden Bauelemente ausgeübten Querkräfte keinen unzulässig hohen Wert erreichen darf. In dieser Hinsicht vermögen die bisher bekannten Kupplungskonstruktionen, bei denen an dem einen Bauteil fest angeordnete Muffen mit an dem jeweils anderen Bauteil ebenfalls fest angeordneten Anschlußstutzen in unmittelbaren Eingriff miteinander kommen, nicht voll zufriedenzustellen.

Der Erfindung liegt daher die Aufgabe zugrunde, eine Kupplungseinheit der eingangs erwähnten Art zu schaffen, die den beiden oben erwähnten, einander widerstrebenden Forderungen gleichzeitig in ausreichendem Maße gerecht wird.

Die gestellte Aufgabe wird gemäß der Erfindung gelöst durch eine Kupplungseinheit, wie sie im Patentanspruch 1 angegeben ist; vorteilhafte Ausgestaltungen und Weiterbildungen der Erfindung ergeben sich aus den Unteransprüchen.

Das Grundprinzip der Erfindung liegt in der quasi schwebenden oder schwimmenden Anordnung der Zwischenplatte, die gleichzeitig die Funktionen des Zentrierungsausgleichs und der Querkraftentlastung übernimmt. Dazu bildet die Zwischenplatte eine Halterung für die Muffen, die diesen ausreichende Beweglichkeit in axialer und radialer Richtung beläßt und dennoch ein sicheres Aufsetzen auf die Anschlußstutzen zur Herstellung dichter Leitungsverbindungen gewährleistet.

Für die weitere Erläuterung der Erfindung und ihrer Vorteile wird nunmehr auf die Zeichnung Bezug genommen, in der ein bevorzugtes Ausführungsbeispiel für die Erfindung veranschaulicht ist. Dabei zeigen in der Zeichnung:

Fig. 1 eine Kupplungseinheit gemäß der Erfindung in Verbindung mit einem ersten Bauteil einer Maschine und einem in seiner Lage relativ dazu veränderbaren zweiten Bauteil in einem Axialschnitt entlang der Schnittlinie Y - Y in Fig. 2,

Fig. 2 die Darstellung von Fig. 1 in einem weiteren Axialschnitt entlang der Schnittlinie Z - Z in Fig. 1,

Fig. 3 eine Ansicht der Zwischenplatte der Kupplungseinheit von Fig. 1 mit durch die Linie X - X in Fig. 1 angedeuteter Blickrichtung,

Fig. 4 eine Muffe der Kupplungseinheit von Fig. 1 bis 3 mit ihrem Adapter in stark vergrößerter Darstellung
und

Fig. 5 einen dieser Muffe zugeordneten Anschlußstutzen in einer gleichartigen Darstellung.

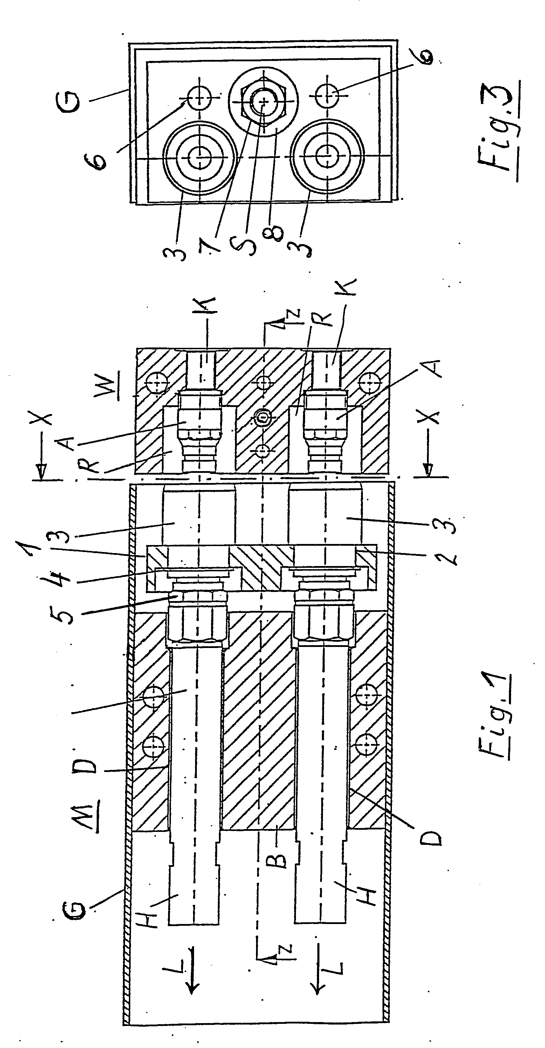

Die Darstellungen in Fig. 1 und 2 zeigen jeweils links ein Maschinengestell M und rechts ein damit zusammenwirkendes Werkzeug W, das gegebenenfalls gegen ein anderes Bauteil ausgetauscht werden kann. Sowohl das Maschinengestell M als auch das Werkzeug W enthalten Fluidleitungen für einen Transport von Hydraulikfluid und/oder Schmieröl, die über eine Kupplungseinheit paarweise in Verbindung miteinander gebracht werden müssen, damit das Werkzeug W vom Maschinengestell M aus versorgt werden kann. Als solche Fluidleitungen sind in der Zeichnung im Werkzeug W feste Kanäle K gezeigt und am Maschinengestell M bewegliche Schlauchleitungen L jeweils durch Pfeile angedeutet. Ihre Fortsetzung auf das Maschinengestell M zu finden die Kanäle K im Werkzeug W in Anschlußstutzen A, die jeder in einem nach dem Maschinengestell M zu offenen Ringraum R zentriert fest angeordnet sind. Die Schlauchleitungen L am Maschinengestell M sind an Zwischenhülsen H angeschlossen, die in einem von einem äußeren Schutzgehäuse G umgebenen Basiskörper B des Maschinengestells M jede jeweils in einem eigenen axialen Durchlaß D mit radialem Spiel Aufnahme finden und sich darin in axialer Richtung verschieben lassen.

Als Verbindungselement für die verschiedenen Fluidleitungen am Maschinengestell M einerseits und im Werkzeug W andererseits ist dazwischen eine Kupplungseinheit vorgesehen, die bei automatischem Betrieb gleichzeitig eine fluiddichte Verbindung zwischen allen betroffenen Fluidleitungspaaren herzustellen gestattet.

Diese Kupplungseinheit weist zunächst eine Zwischenplatte 1 auf, die bei dem dargestellten Ausführungsbeispiel auf zwei am Maschinengestell M befestigten Führungsstangen F axial verschieblich geführt ist, die durch die Zwischenplatte 1 jede in einer eigenen axialen Bohrung 6 hindurchgehen, wie am deutlichsten in Fig. 3 erkennbar ist. Zum axialen Verstellen der Zwischenplatte 1 auf das Werkzeug W zu bzw. davon weg ist im Maschinengestell M ein Hydraulikmechanismus mit einer axial verstellbaren Kolbenstange 5 vorgesehen, deren freies Ende an der Zwischenplatte 1 mit Hilfe einer Mutter 7 in einer Aussparung 8 befestigt ist, wie die Darstellungen in Fig. 2 und 3 zeigen. Die Kombination aus den Führungsstangen F einerseits und der Kolbenstange 5 andererseits gestattet eine genau axiale Verstellung der Zwischenplatte 1 und der davon getragenen Bauelemente.

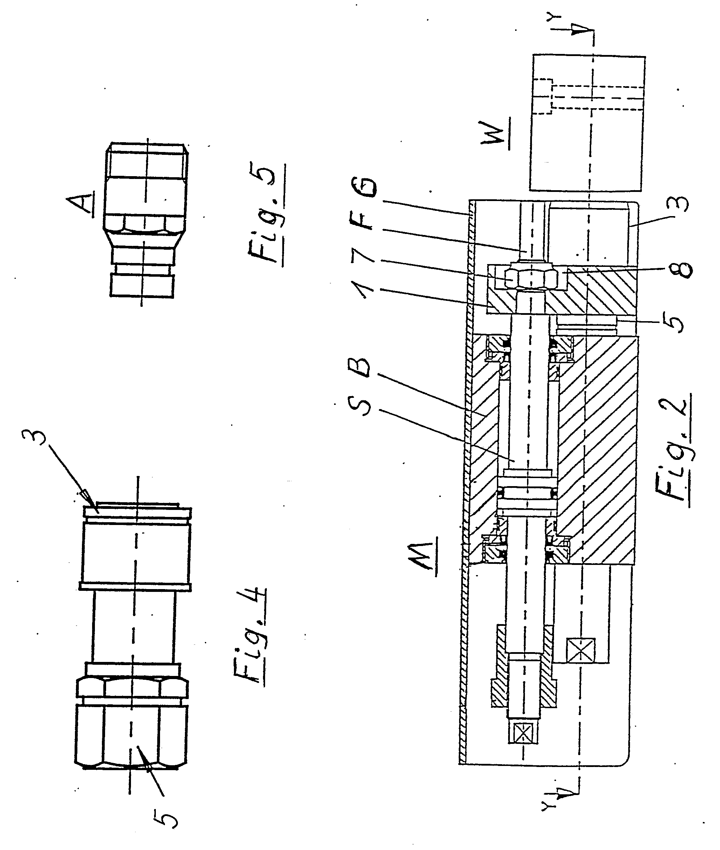

Als eigentliche Verbindungselemente für die Fluidleitungsverbindung enthält die Zwischenplatte 1 für jede herzustellende Leitungsverbindung eine gesonderte Muffe 3, die wiederum jede in der Zwischenplatte 1 in axialer Verlängerung zu den axialen Durchlässen D im Basiskörper B des Maschinengestells M in einer eigenen axialen Aufnahme 2 sitzen und darin mit axialem und radialem Spiel durch je einen eigenen Sicherungsring 4 gehalten sind. Am Maschinengestell M ist jede der Muffen 3 über je einen in den entsprechenden Durchlaß D hineinragenden Adapter 5 mit der zugeordneten Zwischenhülse H verschraubt und damit mit der zugehörigen Schlauchleitung L fluiddicht verbunden. Dank dieser Art von Halterung und Verbindung können die Muffen 3 zusammen mit der Zwischenplatte 1 in axialer Richtung verstellt werden, sie behalten dabei jedoch eine gewisse Beweglichkeit sowohl in axialer als auch in radialer Richtung, die ihre Zentrierung auf den jeweils zugeordneten Anschlußstutzen A am Werkzeug W bei ihrer Einführung in den jeweiligen umgebenden Ringraum R gestattet. Auf der dem Werkzeug W zugewandten Seite der Zwischenplatte 1 springen die Muffen 3 über die Stirnfläche der Zwischenplatte 1 vor, und sie weisen dort einen Außendurchmesser auf, der ihre Einführung in den Ringraum R rund um den jeweils zugeordneten Anschlußstutzen A unter Zentrierung darauf gestattet. In ihrer lichten Weite sind die Muffen 3 den jeweils zugeordneten Anschlußstutzen A am Werkzeug W angepaßt, wie am besten aus der Darstellung in Fig. 4 und 5 hervorgeht, die eine einzelne Muffe 3 mit ihrem Adapter 5 bzw. einen einzelnen Anschlußstutzen A zeigen. Damit lassen sich die Muffen 3 bis zu festhaltendem Einrasten auf den jeweils zugeordneten Anschlußstutzen A aufschieben, wobei soweit erforderlich dichtende O-Ringe für eine fluiddichte Verbindung sorgen. Durch entsprechende axiale Verstellung der Zwischenplatte 1 und der darin gehaltenen Muffen 3 läßt sich somit eine dichte Verbindung zwischen den Schlauchleitungen L am Maschinengestell M einerseits und den Kanälen K im Werkzeug andererseits herstellen, wobei die axiale und radiale Beweglichkeit der Muffen 3 in der jeweiligen Aufnahme 2 in der Zwischenplatte 1 bzw. der Adapter 5 und der Zwischenhülsen H in den Durchlässen D im Basiskörper 1 des Maschinengestells M eine zuverlässige Zentrierung der Muffen 3 auf ihre zugeordneten Anschlußstutzen A am Werkzeug W ohne die Einwirkung von unzulässig großen Querkräften auf irgendwelche Bauelemente gewährleistet.

Wie auch die vorstehende Beschreibung zeigt, liegt der Kern der Erfindung in der Anordnung der Muffen 3 in der Zwischenplatte 1 in quasi schwebender oder schwimmender Weise, wobei sich die Muffen 3 zentrierend in die Ringräume R rund um die einzelnen Anschlußstutzen A am Werkzeug W einführen und dank passender Bemessung ihrer axialen Länge und ihrer lichten Weite zu fluiddichter Verbindung mit den Anschlußstutzen A bringen lassen, womit über die Kupplungseinheit insgesamt eine Speisung des Werkzeugs W mit Betriebsfluid aus dem Maschinengestell M ohne Leckverluste möglich wird, ohne daß dies durch eine übermäßige Belastung durch Querkräfte erkauft werden müßte.

## Ansprüche

1. Kupplungseinheit zum lösbaren Verbinden von Fluidleitungen in oder an zwei in ihrer Lage relativ zueinander veränderbaren Bauteilen, wie beispielsweise einem Maschinengestell und einem austauschbaren Werkzeug, unter Einführen von dem einen Bauteil angehörenden Anschlußstutzen in dem anderen Bauteil zugeordnete Muffen bis zu gegenseitigem Einrasten mit Abdichtung gegen den Außenraum,
gekennzeichnet
durch eine Zwischenplatte (1), die an dem einen Bauteil (M) mittels wenigstens einer daran befestigten Führungsstange (F) axial verschiebbar gehalten und mittels wenigstens einer darin vorgesehenen Kolbenstange (S) in Richtung auf den anderen Bauteil (W) zu bzw. davon weg verstellbar ist,
und
durch eine der Anzahl der zwischen den beiden Bauteilen (M und W) herzustellenden Leitungsverbindungen entsprechende Anzahl von Muffen (3), die jede in je einer in der Zwischenplatte (1) vorgesehenen Aufnahme (2) mit axialem und radialem Spiel gehalten sind und an dem einen Bauteil (M) mit einer beweglichen Schlauchleitung (L) verbunden und an dem anderen Bauteil (W) einem fest angeordneten Anschlußstutzen (A) zugeordnet sind.

2. Kupplungseinheit nach Anspruch 1, dadurch gekennzeichnet, daß die Muffen (3) auf der dem Bauteil (W) mit den Anschlußstutzen (A) zugewandten Seite der Zwischenplatte (1) über deren Stirnfläche vorspringen und einen ihre zentrierende Einführung in die Anschlußstutzen (A) umgebende Ringräume (R) gestattenden Außendurchmesser sowie eine ihrem Aufsetzen auf den jeweiligen Anschlußstutzen (A) bis zu abdichtendem Einrasten darauf angepaßte lichte Weite aufweisen.

3. Kupplungseinheit nach Anspruch 1 oder 2, dadurch gekennzeichnet,
daß jede Muffe (3) in ihrer Aufnahme (2) in der Zwischenplatte (1) mittels eines Sicherungsringes (4) gehalten ist.

4. Kupplungseinheit nach einem oder mehreren der Ansprüche 1 bis 3, dadurch gekennzeichnet,
daß jede Muffe (3) mit der ihr zugeordneten Schlauchleitung (L) über je einen in einem eigenen Durchlaß (D) in dem einen Bauteil (M) axial verschieblich und radial beweglich geführten Adapter (5) verbunden ist.

5. Kupplungseinheit nach Anspruch 4, dadurch gekennzeichnet, daß jeder Adapter (5) mit der zugehörigen Schlauchleitung (L) über je eine in dem entsprechenden Durchlaß (D) ebenfalls axial verschieblich und radial beweglich geführte rohrförmige Zwischenhülse (H) verbunden ist.

6. Kupplungseinheit nach Anspruch 5, dadurch gekennzeichnet, daß jeder Adapter (5) mit der zugehörigen Zwischenhülse (H) fest verschraubt ist.

7. Kupplungseinheit nach einem oder mehreren der Ansprüche 1 bis 6, dadurch gekennzeichnet,
daß die Zwischenplatte (1) die Führungsstange (F) in einer durchgehenden axialen Bohrung (6) aufnimmt und mit der Kolbenstange (S) mittels einer Mutter (7) fest verschraubt ist.

Fig. 1

Fig. 3

EP 0 374 718 A1

Fig. 5

Fig. 4

Fig. 2

Europäisches Patentamt

**EUROPÄISCHER RECHERCHENBERICHT**

Nummer der Anmeldung

EP 89 12 3048

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 168 333 (S.A. DES ETABLISSEMENTS STAUBLI) * Zusammenfassung; Figuren * --- | 1 | F 16 L 37/00 |
| A | US-A-4 411 317 (GIESWEIN) * Zusammenfassung; Figuren * --- | 1 | |
| A | GB-A-2 077 872 (E.A. WHITE et al.) * Zusammenfassung; Figuren * ----- | 1 | |

**RECHERCHIERTE SACHGEBIETE (Int. Cl.5)**

F 16 L

Der vorliegende Recherchenbericht wurde für alle Patentansprüche erstellt

| Recherchenort | Abschlußdatum der Recherche | Prüfer |
|---|---|---|
| DEN HAAG | 28-03-1990 | BARTSCH A.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)